# EUROPÄISCHE PATENTSCHRIFT

(11) **EP 1 933 057 B1**
(45) Veröffentlichungstag und Bekanntmachung des Hinweises auf die Patenterteilung: **27.05.2015**
(21) Anmeldenummer: 07022468.8
(22) Anmeldetag: 20.11.2007
(51) Int. Cl.: F16D 69/02, C08J 5/14

(54) **Nasslaufreibbelag**
Wet friction pad
Garniture de friction humide

(30) Priorität: 20.11.2006 AT 19132006
(43) Veröffentlichungstag der Anmeldung: 18.06.2008
(73) Patentinhaber: Miba Frictec GmbH, 4663 Laakirchen (AT)
(72) Erfinder: Föge, Volker, 4820 Bad Ischl (AT)
(74) Vertreter: Burger, Hannes

(56) Entgegenhaltungen:
- EP-A- 0 762 009
- EP-A- 1 382 879
- DE-A1- 10 334 881
- DE-B1- 2 340 464
- US-A- 5 858 511
- US-A- 5 895 716
- US-A- 5 952 249
- US-A- 5 989 375
- US-A1- 2003 100 239
- US-B1- 6 277 769

## Beschreibung

Die Erfindung betrifft ein Verfahren zur Herstellung eines Reibbelages für den Nasslauf, bei dem ein Fasergewebe bei dem ein Fasergewebe aus Stapelfasern mit einem Harz oder Harzgemisch versetzt und danach unter Druck und/oder bei erhöhter Temperatur ausgehärtet wird, wobei die Aushärtung des Harzes oder Harzgemisches zumindest in zwei Schritten durchgeführt wird, wobei in einem ersten Schritt das Harz oder Harzgemisch zu einem Vorprodukt vorpolymerisiert wird und in einem weiteren Schritt, nach der Anordnung des Vorproduktes auf einem Träger, die Endaushärtung des Harzes oder Harzgemisches erfolgt.

Herkömmliche Reibbeläge für den Nasslauf werden üblicherweise aus so genannten Rovinggeweben mit Langfasern hergestellt, wobei verschiedene Gewebebindungen wie z.B. Leinwandbindung, Atlasbindung, Köperbindung, etc., zur Anwendung kommen. Diese Gewebe werden mit Harz imprägniert und in einem nächsten Prozessschritt unter definiertem Druck und Temperatur ausgehärtet, um eine gewisse Festigkeit zu erreichen. Je mehr Harz sich im Belag einlagern kann, je höher ist auch die Festigkeit des Reibbelages. Derzeit werden Materialien verwendet, bei denen der Harzanteil zwischen 18 % und 40 % limitiert ist. Dies hat verschiedene Gründe. Zum einen werden die Porosität des Gewebes und damit die Ölaufnahmefähigkeit durch das Harz reduziert. Dies führt zu einer Verringerung der Kühlfähigkeit des Reibsystems und zu einer Verschlechterung der Notlaufeigenschaften. Andererseits wird durch das Pressen ein Harzfilm an der Reiboberfläche ausgebildet, der zu schwankenden Reibwerten führt bzw. den Reibwert auch drastisch verringert. Das Harz an der Reiboberfläche bedingt häufig auch eine erhöhte Geräuschbildung. Weiters bedingt der geringe Harzanteil eine Erhöhung der Verschleißrate und damit, durch die steigende Zerrüttung, eine kürzere Lebenszeit.

Reibbeläge an sich sind aus dem Stand der Technik bereits vielfach bekannt. So beschreibt z.B. die DE 31 17 823 A ein Verfahren zum Herstellen von Reibbelägen für Reibungskupplungen, bei dem textile Fasern, Bindemittel und Belagmaterialen enthaltende Stränge zu einer ringförmigen Scheibe gewickelt werden, diese Scheibe getrocknet, heiß gepresst und ausgehärtet wird und anschließend an ihren Oberflächen durch spanende Bearbeitung geglättet wird. Das Bindemittel und die Belagmaterialien werden dabei mit Stapelfasern zu einem homogenen Gemisch vermischt, das zu einem oder mehreren Strängen ausgepresst wird, aus dem bzw. denen die Scheibe unmittelbar gewickelt wird. Die Stapelfasern weisen dabei eine Länge von ca. 6 mm auf.

Auch die DE 29 44 864 A beschreibt einen Reibbelag, der im Wesentlichen aus einem Fasermaterial, einer polymeren Bindemittelmasse, Füllmittel sowie gegebenenfalls weiteren Zusätzen aufgebaut ist, wobei das Fasermaterial ganz oder teilweise aus Kieselsäurefasern besteht. Die Kieselsäurefasern können eine Stapellänge von 1 mm bis 40 mm aufweisen. Weiters kann das Fasermaterial aus einem Gemisch aus Kieselsäurefasern und Kohlenstofffasern gebildet sein. Die Kieselsäurefasern können bspw. mit vollaromatischen Polyamidfasern im Volumenverhältnis 1:1 zu einem Mischzwirn verzwirnt werden. Mehrere dieser Zwirne werden zu einem Band zusammengefasst und durch ein Taufbad geführt, das eine übliche Imprägniermischung enthält. Diese Mischung besteht im Wesentlichen aus Phenolharz, Natur- und Syntheselatizes, sowie Russ und Graphit, Kaolin, Zinkoxid und Schwefel. Nach dem Imprägnieren werden die Bändchen bis zur Klebefreiheit getrocknet, sodann zu einem scheibenförmigen Vorformling gewickelt und anschließend verpresst. Dieser Reibbelag wird unter anderem für Scheiben- und Trommelbremsen, als Reibbelag von Kupplungen sowie als Scheibenmaterial bei Mehrscheibenkupplungen verwendet.

Die DE 30 23 188 A beschreibt ein Material für die Herstellung eines Reibelementes mit verbesserter Abriebfestigkeit, welches ein Gemisch aus etwa 5 % bis 60 % Aramidfasern, die mit 40 % bis 95 % eines wärmehärtbaren Zements überzogen sind, der ein wärmehärtendes Harz und ein wärmehärtbares Elastomer aufweist. Der wärmehärtbare Zement kann 20 Gew.-% bis 80 Gew.-% Phenol/Formaldehyd-Harz und 80 % bis 20 % natürlichen Kautschuk aufweisen. Als Aramidfasern können kontinuierliche Fäden, Stapelfasern oder geschnittene Fasern verwendet werden. Dabei können die Aramidfasern derart mit dem wärmehärtbaren Zement überzogen werden, dass die Faserbündel aufgespreizt oder geöffnet werden, um die Zementdispersion leichter eindringen zu lassen, sodass alle Fäden mit dem Zement in Berührung kommen und Zementfeststoffe über ihre Länge aufnehmen.

Die DD 224 641 A beschreibt ein Verfahren zur Herstellung von Reibwerkstoffen mit Glasfasern als Verstärkungsmittel und Kautschuk als Bindemittel, wobei der Reibwerkstoff in Semi-Ebonitbereich, also mit mehr als 5 Gew.-% und weniger als 25 Gew.-% Schwefel, auf den im Reibwerkstoff enthaltenen Kautschuk bezogen, vulkanisiert wird. Der Reibwerkstoff kann dabei Kurzfasern, wie Stapelfasern, mill-Fasern, Kurzschnitte oder dgl. enthalten, die z.B. mit Knetmischgeräten mit Kautschuk in fester, gelöster oder dispergierter Form, mit den Füllstoffen sowie Vulkanisationsmittel und Hilfsmittel vermischt werden.

Diese bekannten Reibbeläge sind für Trockenanwendungen vorgesehen, weshalb die Fasern und das Harz homogen vermischt und zu einem Strang verarbeitet werden.

Aus der EP 0 762 009 A1 ist ein Verfahren zur Herstellung eines auf Kohlenstoff basierenden Reibmaterials für Oberflächenanwendungen mit kontinuierlichem Schlupf für Kraftfahrzeuge bekannt. Es ist dazu ein Gewebe vorgesehen, das aus auf Kohlenstoff basierenden Fasern besteht, die im Bündel gesponnen sind und die Bündel in Stränge verdrillt werden. Eine Phenolharzlösung wird auf das Gewebe aufgebracht, sodass diese entlang der Fasern aufgesaugt wird und die Zwischenräume in den Strängen nicht vollständig gefüllt werden. Das Harz wird in der Lösung gehärtet, wobei die Phenolharzlösung etwa 18 bis etwa 40 Gew.-% Phenolharz und etwa 60 bis etwa 82 Gew.-% eines auf Alkohol basierenden Lösungsmittels umfasst. Dadurch sind die Fasern entlang natürlicher Kontaktpunkte der Fasern miteinander verbunden, wobei die Fasern Längsspalte zwischen den Fasern definieren, und wobei die Längsspalte im Wesentlichen frei von dem Bindemittel sind, sodass das Reibmaterial eine Mikrostruktur und Mikroporosität aufweist, die offen ist, um einen Durchflussweg für Öl durch das Reibmaterial vorzusehen, wodurch eine Hydrodynamik durch eine Eingriffsfläche des Reibmaterials im Wesentlichen beseitigt ist, sodass eine konsistente wie auch stabile Reibleistung erreicht wird und ein Ruckeln, Stottern sowie Kreischen gesteuert ist. Die Fasern selbst können eine Länge zwischen 12,7mm (1/2") bis 101,6mm (4") aufweisen.

Aus der DE 103 34 881 A1 ist ein Verfahren zur Herstellung eines auf einem flächigen Carbonfaser-Gewebe basierenden Reibmaterials für Nassreibelemente bekannt. Dabei wird das Carbonfaser-Gewebe mit einem Harz imprägniert. Während der Aushärtung wird das so hergestellte Prepreg unter einer gegenüber der Umgebungstemperatur erhöhten Aushärtetemperatur und vor Beginn und/oder zumindest während eines Teils des Aushärtezeitraums an seinen Oberflächen mittels eines Presswerkzeugs mechanisch gepresst.

Die US 5,895,716 A beschreibt einen Verbundwerkstoff aus Carbonfasern, mit darauf abgeschiedenen Kohlenstoffpartikeln, wobei auf letzteren pyrolytisch hergestellter Kohlenstoff aufgebracht ist. Es werden damit Nassreibelemente hergestellt.

Die US 5,858,511 A beschreibt ein Reibmaterial mit Rillung, bestehend aus einer Einfachschicht aus einem pyrolytischem Kohlenstofffasergewebe. Es werden hierfür Garnstränge verwendet, die unbeschädigt sind. Zur Herstellung wird ein Carbonfasergewebe geformt, wobei dieses Gewebe mit einem Kohlenstoff enthaltenden Polymermaterial beschichtet ist und danach dieses geformte Carbonfasergewebe carbonisiert und verdichtet wird, wobei über die Formgebung in der Form dem Gewebe die Rillung verliehen wird.

Die US 6,277,769 B1 beschreibt ein Reibmaterial für Nassanwendungen, umfassend ein harzimprägniertes Kohlefasergewebe. Durch die spezielle Herstellung nach dieser US-B ist dieser Nassreibbelag praktisch undurchlässig für das Öl, allerdings sind makroskopische Ausnehmungen zwischen den Garnfäden vorhanden, die als Ölreservoir an der Arbeitsoberfläche sowie für den Ölabtransport an der Oberfläche verwendet werden.

Die EP 1 382 879 A1 beschreibt einen Reibbelag einer Nassreibungskupplung, der aus einem Gewebe, Gewirke, Gestricke, Gelege oder Geflecht aus Kohlenstofffaserbündeln oder - garnen hergestellt wird, in dem dieses mit pyrolytischem Kohlenstoff imprägniert wird und dieses in der Folge carbonisiert oder graphitiert wird zu einem C/C-Körper, mit Mikroporen im Kohlenstoff und Makroporen zwischen den Kohlenstofffaserbündeln. Es wird eine Infiltration des C/C-Körpers mit Silizium durchgeführt, sodass ein C/SiC-Körper entsteht, bei welchem die Mikroporen im Wesentlichen vollständig geschlossen sind und dessen Porosität bezogen auf die Makroporen mehr als 8 Vol.-% beträgt.

Aus der US 2003/0100239 A1 ist ein Verbundwerkstoff mit Kohlenstoffmatrix bekannt. Dieser Verbundwerkstoff wird aus einem Stoff aus schmelzbaren und nicht schmelzbaren Fasern hergestellt, der in der Folge carbonisiert wird. Für die Herstellung des Stoffes werden thermoplastische Fasern mit stabilisierten Kohlenstofffasern durch das Anschmelzen der Thermoplastfasern miteinander verbunden. Die Kohlenstofffasern haben eine Länge von größer als 10 mm, bevorzugt größer als 25 mm.

In der US 5,952,249 A wird ein Stoff aus mit amorphem Kohlenstoff beschichteten Kohlenstofffasern beschrieben, der aus einer einzigen Schicht aus einem gewobenen Kunststofffaserstoff aus miteinander verwobenen Garnfäden besteht. Diese Garnfäden werden aus individuellen Faserbündeln gebildet und haben amorphen Kohlenstoff zwischen den einzelnen Fasern. Zur Herstellung wird ein Kohlenstofffasergewebe mit einem Harz imprägniert und dieses in der Folge auf eine Temperatur erhitzt, bei welcher das Harz in den amorphen Kohlenstoff überführt werden kann (Zusammenfassung). Die Kohlenstofffasern können u.a. auch Stapelfasern sein.

Die US 5,989,375 A beschreibt ein Verfahren zur Herstellung eines Reibmaterials aus Aramidstapelfasern und einem hitzebeständigen Harz. Die Stapelfasern werden trocken kardengelegt und werden danach die daraus hergestellten Matten vernadelt.

Aus der DE 23 40 464 A ist ein Reibelement für Öllauf zur Kraftübertragung zwischen beweglichen Teilen, bestehend aus einem Trägermaterial und darauf aufgebrachter Reibschicht aus organisch gebundenen Fasermaterial bekannt, wobei als Reibschicht ein mit organischem Bindeharz getränktes Kohlenstofffasergeflecht verwendet wird.

Aufgabe vorliegender Erfindung ist es, einen Reibbelag für die Nassanwendung zur Verfügung zu stellen, der eine hohe Ölaufnahmekapazität aufweist.

Diese Aufgabe der Erfindung wird dadurch gelöst, dass bei dem eingangs genannten Verfahren zur Herstellung eines Reibbelages für den Nasslauf Stapelfasern mit einer Länge, die ausgewählt ist aus einem Bereich mit einer unteren Grenze von 30 mm und einer oberen Grenze von 200 mm eingesetzt werden, die Vorpolymerisation des Harzes oder Harzgemisches bei einer Temperatur zwischen 150 °C und 250 °C drucklos und die Endaushärtung unterhalb des Schmelzpunktes des Harzes oder Harzgemisches, damit dieses nicht verflüssigt wird, durchgeführt wird. Durch die Verwendung eines Stapelfasergewebes für den erfindungsgemäßen Nasslaufreibbelag wird eine deutlich höhere Porosität im Vergleich zu Nasslaufreibbelägen aus dem Stand der Technik erreicht. Damit steht für die Ölaufnahme ein erhöhtes Volumen zur Verfügung. Durch den erhöhten Ölanteil im Nasslaufreibbelag kann die Verschleißrate dieses Reibbelages reduziert und damit dessen Standzeit erhöht werden und wird dadurch auch eine bessere Kühlwirkung des Tribosystems erreicht. Durch die zweischrittige Aushärtung des Harz bzw. Harzgemisches kann ein höherer Harzanteil aufgebracht werden, sodass die Festigkeit des Reibbelages verbessert werden kann.

Die Vorpolymerisation des Harzes oder Harzgemisches wird drucklos durchgeführt. Dadurch lagert sich das Harz an die Fasern an ohne jedoch das freie Volumen des Gewebes auszufüllen und ohne dass das Harz an die Oberfläche gedrückt wird. Es bildet sich damit also keine reine Harzschicht an der Belagsoberfläche aus, sodass an dieser die Fasern des Gewebes zum Einsatz kommen. Dies führt zu einem verbesserten Verhalten im Hinblick auf Geräuschentwicklung, Vibrationen und Rauheit. Außerdem können damit konstantere Reibwerte bei unterschiedlichem Druck- und Differenzialdrehzahlbedingungen erreicht werden.

Die Aushärtung des Harzes oder Harzgemisches erfolgt bevorzugt bei erhöhter Temperatur, jedoch unterhalb des Schmelzpunktes des Harzes oder Harzgemisches. Damit wird das Harz noch einmal aktiv, jedoch nicht verflüssigt, sodass die Haftung an den Fasern nicht verloren geht. Es kann damit die Gewebematrix spannungsarm verdichtet werden ohne dabei geschädigt zu werden, bspw. durch Riss- oder Bruchbildung. Wiederum ist es damit möglich, dass sich durch das mögliche Verpressen des Reibbelages aufgrund der Verarbeitung unterhalb des Schmelzpunktes keine reine Harzschicht an der Belagsoberfläche bildet. Mit der zweiten Stufe, also der Endvernetzung des Harzes, wird zusätzlich die Reibbelagfestigkeit erhöht. Durch den hohen Harzanteil und dem hohen Vernetzungsgrad kann bzgl. Setzverhalten und Verschleiß eine deutliche Verbesserung erzielt werden.

Zur Erhöhung der Saugfähigkeit der Stapelfasern können diese durch Reißen aus Langfasern hergestellt sein, wenngleich im Rahmen der Erfindung es selbstverständlich möglich ist, auch geschnittene Stapelfasern zu verwenden bzw. Fasern die bereits aufgrund ihrer Herstellung als Stapelfasern anfallen.

Die Stapelfasern weisen eine Länge auf die ausgewählt ist aus einem Bereich mit einer unteren Grenze von 30 mm und einer oberen Grenze von 200 mm. Die damit hergestellten Fasergewebe weisen eine sehr gute Ölaufnahmekapazität auf.

Es ist weiters von Vorteil, wenn Stapelfasern mit einer Länge verwendet werden, die ausgewählt ist aus einem Bereich mit einer unteren Grenze von 60 mm und einer oberen Grenze von 140 mm, wodurch die Ölaufnahmekapazität vergleichmässigt werden kann.

Der Anteil des Harzes bzw. Harzgemisches, bezogen auf das Fasergewebe/Harzgemisch kann ausgewählt sein aus einem Bereich einer unteren Grenze von 35 %, insbesondere 40 %, und einer oberen Grenze von 75 %, insbesondere 85 %, wodurch der Nasslaufreibbelag eine sehr hohe Festigkeit aufweist.

Eine verbesserte Festigkeit des Nasslaufreibbelages wird aber auch erreicht, wenn der Anteil des Harzes bzw. Harzgemisches, bezogen auf das Fasergewebe/Harzgemisch ausgewählt wird aus einem Bereich mit einer oberen Grenze von 70 %, insbesondere einem Bereich einer unteren Grenze von 40 %, vorzugsweise 50 %, und einer oberen Grenze von 60 %, vorzugsweise 70%.

Vorzugsweise ist das Harz ausgewählt aus einer Gruppe umfassend Epoxydharze, Phenolharze, Melaminharze, Cyanatharze sowie Mischungen daraus. Mit diesen Harztypen wird eine sehr gute Haftfestigkeit zum verwendeten Fasergewebe und damit eine entsprechend gute Festigkeit des Nasslaufreibbelages erreicht.

Bevorzugt werden Stapelfasern ausgewählt aus einer Gruppe umfassend Karbonfasern, Glasfasern, Aramidfasern, Polyacrylnitrilfasern, Mineralfasern, wie z.B. Basaltfasern, Siliziumcarbidfasern sowie Mischungen daraus, verwendet. Diese Fasern weisen eine sehr gute Temperaturbeständigkeit auf, sodass die Standzeit und auch die mechanische Festigkeit des Nasslaufreibbelages verbessert werden kann.

Der Nasslaufreibbelag kann eine Ölaufnahmekapazität aufweisen, die ausgewählt ist aus einem Bereich mit einer unteren Grenze von 0,2 ml/cm³ Belag und einer oberen Grenze von 0,4 ml/cm³ Belag, womit eine Verbesserung der Kühlfähigkeit des Reibsystems und eine Verbesserung der Notlaufeigenschaften erreicht wird.

Der Nasslaufreibbelag kann über ein Klebemittel mit dem Träger des Reibbauteils verklebt werden. Beispiel für derartige Klebemittel sind synthetische Harze, wie z.B. Epoxide, Harze auf Phenolbasis, Klebemittel auf Kautschukbasis, beispielsweise auf Nitrilkautschukbasis. Es ist damit eine einfache und kostengünstige Montage möglich.

Das Klebemittel kann durch das Harz oder Harzgemisch selbst gebildet sein, sodass der Nasslaufreibbelag direkt auf den Träger aufgebracht werden kann, ohne das weitere Verfahrensschritte zur Anordnung des Reibbelages erforderlich wären.

Der Reibbauteil kann als Reiblamelle für nasslaufende Kupplungen, Differenzialsperren, Verteilergetriebe oder Torque Vectoring Anwendungen bzw. als Synchronring oder Doppelkonusring für Schaltgetriebe ausgebildet sein. Unter Torque Vectoring Anwendungen versteht man bspw. Anwendungen in der Fahrdynamik bei denen bspw. Drehzahlunterschiede eines Sperrdifferenzials durch dieses System vergrößert werden. Man kann damit bspw. die Lenkung eines Fahrzeuges unterstützen, in dem die Antriebsmomente ungleich auf die Räder verteilt werden. Dadurch kann ein höheres Moment zum kurvenäußeren Rad gelenkt werden, sodass bei normalen Fahrbedingungen ein übersteuerndes Verhalten eingestellt werden kann.

Bei dem erfindungsgemäßen Verfahren kann die Vorpolymerisation bis zu einem Polymerisationsgrad durchgeführt werden, der ausgewählt ist aus einem Bereich einer unteren Grenze von 70 % und einer oberen Grenze von 98 %, insbesondere 95 %. Es wird damit erreicht, dass das Vorprodukt bereits eine sehr hohe mechanische Festigkeit für die Weiterverarbeitung zum fertigen Reibbauteil aufweist, sodass die Handhabung dieses Vorproduktes vereinfacht ist. Der Grad der Festigkeit kann dabei über den Polymerisationsgrad geregelt werden, wobei mit einer Zunahme des Polymerisationsgrades auch die mechanische Festigkeit zunimmt.

Es ist auch möglich, dass die Stapelfasern direkt zu Fasersträngen verzwirnt werden, also keine Garne hergestellt werden, sodass dem Gewebe eine gröbere Struktur und damit wiederum ein größeres Hohlraumvolumen zur Ölaufnahme verliehen werden kann.

Die Verbindung mit dem Harz bzw. Harzgemisch bzw. die Ölaufnahmekapazität kann auch damit verbessert werden, dass die Stapelfasern oder die Langfasern vor dem Versetzen mit dem Harz oder Harzgemisch aufgeraut werden.

Schließlich ist es möglich, dass die Stapelfasern oder Langfasern vor dem Versetzen mit dem Harz oder Harzgemisch mit einem Haftvermittler versetzt werden, wonach die Haftfestigkeit des Harzes an den Fasern verbessert werden kann. Derartige Haftvermittler sind bspw. Silane, Harze, wie z.B. Primer auf Phenolbasis.

Zum besseren Verständnis der Erfindung wird diese anhand nachfolgender Beschreibung erläutert.

Für die Herstellung des Nasslaufreifbelages werden gemäß diesem Ausführungsbeispiel Karbonlangfasem zu kurzen Fasern mit einer durchschnittlichen Länge ausgewählt aus einem Bereich mit einer unteren Grenze von 30 mm und einer oberen Grenze von 200 mm zerrissen und in weiterer Folge zu Fasersträngen verzwirnt. Dadurch werden eine hohe Porosität und vor allem eine hohe spezifische Oberfläche erreicht.

Aus diesen Fasersträngen werden in der Folge Gewebe hergestellt, wobei als Gewebebindung je nach Anwendung sowohl Leinwand-, Köper-, als auch Atlas-Gewebe zur Anwendung kommen. Diese Art der Bindungen ist hinlänglich bekannt, so dass sich eine weitere Erörterung dieser Bindungen bzw. der Untergruppen von diesen Grundbindungen an dieser Stelle erübrigt und so der Fachmann die einschlägige Literatur verwiesen.

Die Faserstränge können auch aus anderen, insbesondere den oben genannten Fasern sowie Mischungen von unterschiedlichen Stapelfasern hergestellt werden. Bspw. ist es möglich, Karbonfasem mit Glasfasern oder Aramidfasern (Keflar-Fasern) oder Silizium-Carbid-Fasem vermischt werden. Auch Hybridgewebe aus mehreren der genannten Faserarten sind möglich. Ebenso können Mineralfasern wie bspw. Basaltfasern eingesetzt werden. Auch Metallfasern an sich können verwendet werden bspw. Kupferfasern, etc. Es ist weiters möglich, die Stapelfasern als Langfasern herzustellen, die mehrschichtig aufgebaut sind bspw. mit einer härteren Faser im Kern und einer weicheren Faser als Mantel der Langfaser.

Prinzipiell sind auch die Textilfasern verwendbar, wobei hier allerdings die Verschleißfestigkeit und Temperaturbeständigkeit deutlich verringert ist, so dass die vorzugsweise oben genannte Fasern bzw. Fasermischungen verwendet werden. Insbesondere betrifft dies Fasermischungen mit Karbonfasern, da Karbonfasern eine sehr gute Temperaturbeständigkeit aufweisen.

Die Stapelfasergewebe werden in der Folge durch ein Harzbad geführt. Als Harztypen kommen insbesondere oben genannte Harze, wie bspw. Harze die durch Umsetzung Phenol, z.B. Resorcin, mit Aldehyden, z.B. Formaldehyd, Acrolein, oder Melaminharze, Epoxidharze, epoxidierte Phenolharze, Melamin/Formaldehyd-Harze, oder dgl. zum Einsatz.

Nach dem Versetzen des Stapelfasergewebes mit dem Harz wird dieses über eine Trockenzone geführt und dabei vorgetrocknet.

Im Gegensatz zu bisher verwendeten Rovinggeweben aus Langfasern haben Stapelfasergewebe durch die hohe spezifische Oberfläche eine deutlich höhere Harzaufnahmefähigkeit. Bevorzugt weisen diese Gewebe eine spezifische Oberfläche auf, die mindestens 10 %, vorzugsweise mindestens 50 %, größer ist als jene von Geweben mit Langfasern. Es wird bei dem Tauchvorgang des Gewebes im Harzbad ein Harzanteil von dem Gewebe aufgenommen, der ausgewählt ist aus einem Bereich mit einer unteren Grenze von 40 % und einer oberen Grenze von 90%, insbesondere 85 %. Die Harzaufnahme kann bspw. durch die Verweildauer des Stapelfasergewebes im Harzbad selbst eingestellt werden.

Dieses imprägnierte Gewebe wird in der Folge unter definierter Temperatur bis auf den gewünschten Polymerisationsgrad, bspw. einem Polymerisationsgrad von 95 % vorpolymerisiert und dabei teilausgehärtet. Die Temperatur ist dabei zum einen abhängig vom verwendeten Harz und kann zwischen 150° C und 250° C betragen. Ebenso kann über die Zeitdauer auch der Polymerisationsgrad beeinflusst werden. Die Vorpolymerisation kann in einer Zeit von 2 Stunden bis 7 Stunden zum gewünschten Polymerisationsgrad durchgeführt werden.

Vorzugsweise wird die Vorpolymerisation drucklos durchgeführt. Unter drucklos ist dabei zu verstehen, dass das Harz/Gewebe-Compound lediglich unter dessen Eigengewicht vorpolymerisiert wird. In einer Ausführungsvariante dazu ist es möglich, dass mehrere dieser Gewebe übereinander gestapelt und mittels Trennplatten voneinander getrennt werden. In diesem Fall bedeutet drucklos, dass dieses harzgetränkte Gewebe lediglich unter seinem Eigengewicht und dem Gewicht der darüber liegenden Trennplatten ausgehärtet wird. In einer speziellen Ausführung dazu ist es möglich, dass zumindest einzelne, bevorzugt sämtliche, Lagen der harzgetränkten Gewebe gesondert abgestützt werden, beispielsweise seitlich, sodass die unten angeordneten Lagen nicht vom Gewicht der darüber angeordneten Lagen belastet sind. Es kann damit, dass kein direkter Kontakt zwischen den Lagen vorhanden ist, ein einheitlicheres Ergebnis über den gesamten Stapel erreicht werden. Für die Aushärtung können bspw. Plattenpressen, Trockenöfen, oder dgl. verwendet werden.

Durch diese drucklose Vorpolymerisation wird der Vorteil erreicht, dass sich das Harz an den Fasern anlagert, ohne jedoch das Volumen auszufüllen. Ebenso wird das Harz nicht an die Oberfläche gedrückt. In Abhängigkeit vom gewählten Polymerisationsgrad erhält das Gewebe bereits in diesem Vorprodukt eine relativ hohe Festigkeit.

In weiterer Folge wird zur Herstellung des Reibbauteils, also insbesondere jenen Bauteilen die oben bereits erwähnt wurden, der Nasslaufreibbelag mit Klebstoff laminiert und aus dem Gewebe die entsprechenden Formen erzeugt, z.B. ausgestanzt oder ausgeschnitten, bspw. können so Ringe, Segmente, oder dgl. hergestellt werden. Diese Vorprodukte werden dann auf einem Träger, als bspw. eine Lamelle für Kupplungen oder Differenzialsperren oder Verteilergetriebe bzw. auf Synchronringen etc. vorpositioniert.

In einer besonderen Ausführungsvariante dazu wird anstelle des Klebstoffes das Harz bzw. Harzgemisch selbst als Verbindungsmittel zum Träger verwendet.

Beim Aushärtungs- bzw. Verklebungsprozess wird in der Folge der Träger mit dem Vorprodukt in einer Heizpresse mittels Presswerkzeug verklebt. Dabei wird unter dem definierter Temperatur, z.B. zwischen 150°C und 180°C in Abhängigkeit vom verwendeten Harz bzw. vom jeweiligen Vorpolymerisationsgrad, unter Druck für eine bestimmte Zeit, bspw. ausgewählt aus einer Zeitspanne mit einer unteren Grenze von 30 sec und einer oberen Grenze von 5 min, wiederum abhängig vom Vorpolymerisationsgrad, dass Gewebe zumindest annähernd vollständig auspolymerisiert, also gehärtet. Durch das Endaushärten der Harzmatrix und das dabei gegebenenfalls stattfindende gleichzeitige Verdichten des Nasslaufreibbelages wird zwar die Porosität im Vergleich zum Vorprodukt erniedrigt, liegt aber noch deutlich höher als bei Rovinggeweben. Durch diesen Prozessschritt erhält das Gewebe seine Endfestigkeit, die Endstärke und die endgültige Porosität. Es lässt sich damit also die Porosität im gewissen Grenzen einstellen. Diese Werte können je nach Anwendung und Anforderungen variiert werden. Es kann bspw. eine Dichte von 0,5 g/cm³ bis 1,2 g/cm³ insbesondere 0,6 g/cm³ bis 0,9 g/cm³ bzw. 0,6 g/cm³ bis 0,7 g/cm³, eingestellt werden.

Die Porosität des Nasslaufreibbelages dieses Ausführungsbeispiels wurde mit einem sogenannten Gurley Densometer ermittelt. Gurley Densometer werden für die Messung der Porosität von Papieren verwendet. Übliche Porositäten von Papieren liegen zwischen 200 µm/Pa s und 600 µm/Pa s. Der erfindungsgemäße Nassreibbelag weist trotz des hohen Harzanteils eine Porosität zwischen 2000 µm/Pa s und 2500 µm/Pa s auf.

An nach dem erfindungsgemäßen Verfahren hergestellten Belägen wurden Kompressibilitätstests durchgeführt, und wurde dabei eine Verformung im Bereich von 0,18 mm bis 0,21 mm bei einer maximal aufgebrachten Kraft von 150 000 N festgestellt.

Weiters ist es, wie bereits oben ausgeführt, möglich Maßnahmen zu treffen, um eine verbesserte Verbindung des Harzes mit dem Gewebe zu erreichen. Beispielsweise können die Fasern aufgeraut und/oder mit einem Primer versetzt werden.

Das Ausführungsbeispiel zeigt eine mögliche Ausführungsvariante des Verfahrens bzw. des Reibbelages, wobei an dieser Stelle bemerkt sei, dass die Erfindung nicht auf die speziell dargestellte Ausführungsvariante derselben eingeschränkt ist.

## Patentansprüche

1. Verfahren zur Herstellung eines Reibbelages für den Nasslauf, bei dem ein Fasergewebe aus Stapelfasern mit einem Harz oder Harzgemisch versetzt und danach unter Druck und/oder bei erhöhter Temperatur ausgehärtet wird, wobei die Aushärtung des Harzes oder Harzgemisches zumindest in zwei Schritten durchgeführt wird, wobei in einem ersten Schritt das Harz oder Harzgemisch zu einem Vorprodukt vorpolymerisiert wird und in einem weiteren Schritt, nach der Anordnung des Vorproduktes auf einem Träger, die Endaushärtung des Harzes oder Harzgemisches erfolgt, **dadurch gekennzeichnet, dass** Stapelfasern mit einer Länge, die ausgewählt ist aus einem Bereich mit einer unteren Grenze von 30 mm und einer oberen Grenze von 200 mm eingesetzt werden, die Vorpolymerisation des Harzes oder Harzgemisches bei einer Temperatur zwischen 150 °C und 250 °C drucklos und die Endaushärtung unterhalb des Schmelzpunktes des Harzes oder Harzgemisches, damit dieses nicht verflüssigt wird, durchgeführt wird.

2. Verfahren nach Anspruch 11, **dadurch gekennzeichnet, dass** die Vorpolymerisation bis zu einem Polymerisationsgrad durchgeführt wird, der ausgewählt ist aus einem Bereich mit einer unteren Grenze von 70 % und einer oberen Grenze von 98 %.

3. Verfahren nach Anspruch 11 oder 12, **dadurch gekennzeichnet, dass** zur Herstellung des Fasergewebes Langfasern zu Stapelfasern zerrissen oder geschnitten werden, diese danach zu Fasersträngen verzwirnt werden und aus den Fasersträngen das Gewebe hergestellt wird.

4. Verfahren nach einem der Ansprüche 11 bis 13, **dadurch gekennzeichnet, dass** die Stapelfasern oder die Langfasern vor dem Versetzen mit dem Harz oder Harzgemisch aufgeraut werden.

5. Verfahren nach einem der Ansprüche 11 bis 14, **dadurch gekennzeichnet, dass** die Stapelfasern oder die Langfasern vor dem Versetzen mit dem Harz oder Harzgemisch mit einem Haftvermittler versetzt werden.

6. Verfahren nach einem der Ansprüche 1 bis 5, **dadurch gekennzeichnet, dass** der Anteil des Harzes bzw. Harzgemisches, bezogen auf das Fasergewebe/Harz Gemisch, ausgewählt wird aus einem Bereich mit einer unteren Grenze von 35 % und einer oberen Grenze von 85 %.

7. Verfahren nach einem der Ansprüche 1 bis 6, **dadurch gekennzeichnet, dass** das Harz ausgewählt wird aus einer Gruppe umfassend Epoxidharze, Phenolharze, Melaminharze, Cyanatharze sowie Mischungen daraus.

8. Verfahren nach einem der Ansprüche 1 bis 8, **dadurch gekennzeichnet, dass** die Stapelfasern ausgewählt werden aus einer Gruppe umfassend Carbonfasern, Glasfasern, Aramidfasern, Polyacrylnitrilfasern, Mineralfasern, Siliciumcarbidfasern sowie Mischungen daraus.

## Claims

1. Method of producing a friction lining for wet operation, whereby a textile woven fabric of staple fibers is resinated with resin or resin mixture and then cured under pressure and/or at an increased temperature, and the resin or resin mixture is cured in at least two steps, and in a first step the resin or resin mixture is pre-polymerized to produce a pre-product and the final curing of the resin or resin mixture takes place in another step once the pre-product has been placed on a substrate, **characterized in that** staple fibers with a length selected from a range with a lower limit of 30 mm and an upper limit of 200 mm are used, the pre-polymerization of the resin or resin mixture is run at a temperature between 150 °C and 250 °C without pressure and the final curing takes place below the melting point of the resin or resin mixture in order not to liquefy the latter.

2. Method according to claim 1, **characterized in that** the pre-polymerization is run to a degree of polymerization selected from a range with a lower limit of 70 % and an upper limit of 98 %.

3. Method according to claim 1 or 2, **characterized in that** in order to produce the textile woven fabric, long fibers are torn or cut to form staple fibers, the latter are then twisted to form fiber strands and the woven fabric is made from the fiber strands.

4. Method according to one of claims 1 to 3, **characterized in that** the staple fibers or the long fibers are roughened prior to being resinated with the resin or the resin mixture.

5. Method according to one of claims 1 to 4, **characterized in that** the staple fibers or the long fibers are mixed with a coupling agent prior to being resinated with the resin or the resin mixture.

6. Method according to one of claims 1 to 5, **characterized in that** the proportion of the resin or the resin mixture by reference to the textile woven fabric/resin mixture is selected from a range with a lower limit of 35 % and an upper limit of 85 %.

7. Method according to one of claims 1 to 6, **characterized in that** the resin is selected from a group comprising epoxy resins, phenolic resins, melamine resins, cyanate resins and mixtures thereof.

8. Method according to one of claims 1 to 8, **characterized in that** the staple fibers are selected from a group comprising carbon fibers, glass fibers, aramide fibers, polyacrylonitrile fibers, mineral fibers, silicon carbide fibers and mixtures thereof.

## Revendications

1. Procédé de fabrication d'une garniture de friction pour le fonctionnement humide, dans lequel un tissu de fibres composé de fibres discontinues est mélangé à une résine ou un mélange de résines et puis durci sous pression et/ou à température élevée, le durcissement de la résine ou du mélange de résines étant effectué en deux étapes, la résine ou le mélange de résines étant, dans une première étape, propolymérisé(e) en un produit précurseur et, dans une deuxième étape, le durcissement final de la résine ou du mélange de résines étant effectué après la disposition du produit précurseur sur un support, **caractérisé en ce que** des fibres discontinues d'une longueur qui est sélectionnée dans une plage avec une limite inférieure de 30 mm et une limite supérieure de 200 mm sont utilisées, la prépolymérisation de la résine ou du mélange de résines est réalisée à une température entre 150 °C et 250 °C hors pression, et le durcissement final est réalisé au-dessous du point de fusion de la résine ou du mélange de résines afin que la résine ou le mélange de résines ne soit pas liquéfié(e).

2. Procédé selon la revendication 11, **caractérisé en ce que** la prépolymérisation est réalisée jusqu'à un degré de polymérisation qui est sélectionné dans une plage avec une limite inférieure de 70 % et une limite supérieure de 98 %.

3. Procédé selon la revendication 11 ou 12, **caractérisé en ce que**, pour la fabrication du tissu de fibres, des fibres longues sont déchirées ou coupées en fibres discontinues, celles-ci sont ensuite tordues en brins de fibres et le tissu est fabriqué à partir des brins de fibres.

4. Procédé selon une des revendications 11 à 13, **caractérisé en ce que** les fibres discontinues ou les fibres longues sont rendues rugueuses avant l'opération de mélange avec la résine ou le mélange de résines.

5. Procédé selon une des revendications 11 à 14, **caractérisé en ce que** les fibres discontinues ou les fibres longues sont mélangées à un agent d'adhérence avant l'opération de mélange avec la résine ou le mélange de résines.

6. Procédé selon une des revendications 1 à 5, **caractérisé en ce que** la proportion de la résine ou respectivement du mélange de résines, par rapport au mélange tissu de fibres/résine, est sélectionnée dans une plage avec une limite inférieure de 35 % et une limite supérieure de 85 %.

7. Procédé selon une des revendications 1 à 6, **caractérisé en ce que** la résine est sélectionnée parmi un groupe comprenant des résines époxydes, des résines phénoliques, des résines de mélamine, des résines de cyanate ainsi que des mélanges de celles-ci.

8. Procédé selon une des revendications 1 à 8, **caractérisé en ce que** les fibres discontinues sont sélectionnées dans un groupe comprenant des fibres de carbone, des fibres de verres, des fibres d'aramide, des fibres de polyacrylonitrile, des fibres minérales, des fibres de carbure de silicium ainsi que des mélanges de celles-ci.
